(19) Europäisches Patentamt
European Patent Office
Office européen des brevets

(11) Publication number: **0 105 379 B1**

(12) # EUROPEAN PATENT SPECIFICATION

(45) Date of publication of patent specification: **21.10.87**

(51) Int. Cl.$^4$: **H 01 M 4/22**

(21) Application number: **83900973.5**

(22) Date of filing: **29.03.83**

(86) International application number: **PCT/JP83/00097**

(87) International publication number: **WO 83/03714 27.10.83 Gazette 83/25**

(54) **METHOD OF FORMING LEAD STORAGE BATTERY.**

(30) Priority: **06.04.82 JP 57519/82**
**06.04.82 JP 57520/82**
**05.07.82 JP 117286/82**

(43) Date of publication of application: **18.04.84 Bulletin 84/16**

(45) Publication of the grant of the patent: **21.10.87 Bulletin 87/43**

(84) Designated Contracting States: **DE FR GB**

(56) References cited:
BE-A- 515 290
FR-A- 330 399
FR-A- 379 684
JP-A-56 167 269
US-A-2 518 527
US-A-3 629 006
US-A-3 753 786

(73) Proprietor: **Matsushita Electric Industrial Co., Ltd.**
**1006, Oaza Kadoma**
**Kadoma-shi Osaka-fu, 571 (JP)**

(72) Inventor: **TAKAHASHI, Katsuhiro**
**13-4, Miyanosaka 4-chome Hirakata-shi**
**Osaka-fu 573 (JP)**
Inventor: **WATANABE, Keiichi**
**3-1, Higashi Sonoda-cho 4-chome Amagasaki-shi**
**Hyogo-ken 661 (JP)**
Inventor: **JINBO, Hiroyuki**
**14, Miyukihigashi-cho 3-chome Neyagawa-shi**
**Osaka-fu 572 (JP)**
Inventor: **HOSHIHARA, Naoto**
**40-10, Nakakida-cho Neyagawa-shi**
**Osaka-fu 572 (JP)**

(74) Representative: **Spencer, Graham Easdale et al**
**A.A. Thornton & CO Northumberland House**
**303-306, High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 105 379 B1

## Description

The present invention is concerned with a method of forming a lead storage battery.

Lead storage batteries have been closely associated with the development of the automotive industry, and against this historical background, efforts have been concentrated on improving those properties of batteries which lead to better starting of automobiles, *viz.* the high rate discharge characteristic and the cycle life, which is related to shallow discharge characteristics. The number of applications for lead storage batteries has increased remarkably in recent years; many items of equipment requiring a high rate of discharge have been developed for use on vehicles, so that the compatibility of low and high rates of discharge has become an important consideration in battery technology.

The aging characteristics resulting from deep discharge comprise an early deterioration of capacity which occurs in a comparatively short time and a degradation which occurs gradually over a comparatively long time. The early deterioration has become an important problem as lead-calcium-tin alloy and other non-antimony alloys are increasingly employed to meet the market demand for maintenance-free equipment. It has been found that a battery structure comprising a less reactive α-$PbO_2$ component disposed near the interface between the grid and the active material and a more reactive β-$PbO_2$ component disposed externally of the less-reactive component is effective in suppressing this early deterioration. A procedure for preparing such a structure has been proposed which involves a primary forming stage during which pasted electrodes are charged for a short time in an alkaline aqueous solution, such as sodium hydroxide, potassium hydroxide, or the like, a neutral aqueous solution, such as sodium sulphate, potassium sulphate, lithium sulphate, or the like, or a dilute aqueous solution, such as sulphuric acid containing 15% by weight or less of $H_2SO_4$; this gives rise to the formation of α-$PbO_2$ and is carried out prior to conventional $PbO_2$ formation in a relatively concentrated aqueous solution of sulphuric acid containing more than 15% by weight of sulphuric acid.

The above modification of the forming procedure resulted in a remarkable improvement in the early aging, during which passivation occurs as a result of discharging taking place primarily at the interface between the grid and the active material. However, the long-term aging resulting from softening and fall-off of the active material which occurs after prolonged use has not been eliminated to date. Furthermore, this type of aging tends to occur on the lower portion of the electrode even if, both in the primary and the secondary forming stages, suitable care is exercised to ensure uniform treatment of the entire electrode by submerging it in a sufficient depth of electrolyte. There is therefore a need to develop a new method of inhibiting the aging of the lower part of the electrode while maintaining a desirable high rate discharge characteristic.

In the method described above which employs two dissimilar solutions in the primary and secondary forming stages, an additional step is generally interposed to eliminate the effect of the residual solution used in the primary forming stage on the subsequent secondary forming stage. The prior art describes a procedure in which the electrodes are withdrawn from the electrolyte solution after the primary stage, the residual electrolyte is discarded, and the electrodes are washed with water. Furthermore, a charging current of comparatively low density is used in order to improve the efficiency of $PbO_2$ formation without the evolution of gases and to establish a uniform current distribution. In this procedure, a charging current of 0.2q A is rarely exceeded, where q is the theoretical positive electrode capacity in Ah; a value of from 0.5q A to 0.1q A is commonly employed. Despite the efforts made to ensure a uniform distribution of current, the high rate discharge characteristic which is imparted mainly during the secondary forming stage tends to lack uniformity. As long as this type of procedure is used, it will be necessary to reduce the non-uniformity of the characteristics, especially the aging associated with the high rate discharge characteristic.

U.S. Patent 3753786 describes a procedure in which after a conventional formation stage involving charging the battery while it contains low acid concentration electrolyte under controlled time and temperature conditions, the acid is brought up to an optimum value for proper battery operation by a method which comprises the steps of applying vacuum and a charging current to each battery so as to drive out of the battery a uniform substantial amount of said dilute electrolyte, separating for removal an adjusted amount of the electrolyte driven from the battery, discontinuing the application of vacuum and charging current so as to return the non-separated electrolyte to the battery, adding to each battery a fixed amount of concentrated acid electrolyte, and adjusting said adjusted amount of electrolyte so that the resulting mix of diluted and concentrated acid electrolyte in each battery is at the desired acid concentration level for normal operation of the batteries.

We have now developed a procedure which provides a lead acid storage battery having a satisfactory high rate of discharge characteristic and which inhibits early aging, so that the softening and fall-off of the active material which occurs at the lower part of the electrode in a long run is reduced and uniformity of characteristics is assured.

According to the present invention, therefore, there is provided a method of forming lead acid storage battery, which comprises:

(a) a primary forming stage in which charging is carried out in an electrolyte comprising an alkaline aqueous solution, a neutral aqueous solution, or an aqueous sulphuric acid solution containing 15 wt. % or less of $H_2SO_4$, and

(b) a secondary forming stage in which charging is carried out in an electrolyte comprising an aqueous sulphuric acid solution containing more than 15 wt. % of $H_2SO_4$, characterised in that during the primary forming stage, the charging current is not more than 0.2q A, where q is the theoretical positive electrode capacity in Ah, and the depth of immersion of the electrodes in the electrolyte is from 20 to 80% of the height of the electrodes.

In order to obtain a uniform high rate discharge characteristic during the secondary forming stage, the electrolyte of the secondary stage is preferably prepared by adding sulphuric acid at the end of the primary forming stage without discarding the electrolyte from the primary stage. Another effective approach is to briefly apply a large current at the end of the primary forming stage and/or at the beginning of the secondary forming stage. The current of the charge interposed between the stages is preferably, of at least 0.3q A, where q is as defined above. In addition, the inclusion of one or more discharging steps during the primary forming stage contributes further to improved cycle life in the resulting battery.

For a better understanding of the invention, a number of examples will now be given by way of illustration in which reference will be made to the accompanying drawings, in which:

Figure 1 is a partly sectioned longitudinal cross-section of the lead storage battery during the primary forming stage.

Figure 2 is a partly sectioned longitudinal cross-section of the lead storage battery during the secondary forming stage.

Figure 3 is a graph showing the relation between the depth of immersion of the electrodes in the electrolyte during the primary forming stage and the high rate discharge characteristic of the resulting battery.

Figure 4 is a graph showing the relation between the depth of immersion of the electrodes during the primary forming stage and the cycle life characteristic of the resulting battery.

Figure 5 is a graph showing the relation between the magnitude of the current applied briefly to the electrode between stages and the high rate discharge characteristic of the resulting battery.

Figure 6 is a graph showing the relation between the magnitude of the current applied briefly to the electrodes between stages and the cycle life characteristic of the resulting battery.

Figure 7 is a diagram showing the effects of discarding or retaining the electrolyte used in the primary forming stage when preparing the electrolyte for the secondary forming stage on the uniformity of the high rate discharge characteristic of the resulting battery.

Figure 8 is a graph showing the relation between the number of discharges performed during the primary forming stage and the life of the resulting battery.

Figure 9 is a graph showing the relation between the discharge termination voltage used in the discharge step(s) of the primary forming stage and the life of the resulting battery.

Expanded metal grids of lead-calcium-tin alloy were coated with a paste mainly comprising lead powder, sulphuric acid and water and the coated grids were dried to give pasted electrodes measuring 10 cm by 10 cm. Using 5 units of such pasted electrodes for the positive electrodes and 6 units for the negative electrodes, a battery having a theoretical positive electrode capacity of 90 Ah was prepared.

A schematic view of the cell construction is shown in Figures 1 and 2, in which the battery container (1), positive electrode (2), separator (3) negative electrode (4), positive electrode terminal (5), negative electrode terminal (6) and electrolyte (7) are indicated. During the primary forming stage of the present invention, the electrodes are partially immersed in the electrolyte as shown in Figure 1. During the secondary forming stage, the electrodes are submerged in the electrolyte to the depth shown in Figure 2. Using the basic cell described above, conditions of $PbO_2$ formation were varied in order to investigate the effect on the high rate discharge characteristics and life cycle characteristics of the resulting batteries.

Example 1

For the primary forming stage, the following different aqueous solutions were used as the electrolyte:

A: 0.5 wt. % of NaOH
B: 2 wt. % of $Na_2SO_4$
C: 1 wt. % of $H_2SO_4$
D: 10 wt. % of $H_2SO_4$
E: 15 wt. % of $H_2SO_4$

The depth of immersion of the electrodes in the electrolyte was set at a given level between 0%, *i.e.* the situation where the surface of the electrolyte is just in contact with the lower edges of the electrodes, and 100%, where the top edges of the electrodes are level with the surface of the electrolyte; charging was carried out at a current of 10A (0.11q A) for a period of 2 minutes. Concentrated sulphuric acid was then added to the container to adjust the composition of the electrolyte to a calculated $H_2SO_4$ concentration of approximately 28 wt. % and to give an electrolyte depth as shown in Figure 2; the secondary charging stage was carried out at a current of 10A (0.11q A) for a period of 50 hours. The batteries obtained were designated A to E to correspond with the codes of the electrolytes used in the primary forming stages.

For the purposes of comparison, a battery F was prepared which was formed directly using the secondary forming stage only by omitting the primary forming stage, and a battery G was prepared using a primary forming stage in which the electrolyte was at a depth of 10 mm over the electrodes; in the preparation of battery G, electrolytes A to E were used in the primary forming stage.

The batteries were evaluated as follows. With regard to the high rate discharge characteristics, discharging was carried out at a current of 150A at a temperature of −15°C and was continued until the terminal voltage reached 1.0 v/cell. With regard to the cycle life characteristic, charging and discharging were repeated in cycles each consisting of 1 hour of discharging at a current of 20A and 5 hours of charging at a current of 5A and the number of cycles until the battery capacity dropped to less than 40% of its initial capacity was determined. The relation between the high rate discharge time and the depth of immersion of the electrodes during the primary forming stage is shown in Figure 3, and the relation between cycle life and the depth of electrode immersion is shown in Figure 4.

Example 2.

Using high-porosity pasted electrodes having a satisfactory high rate discharge characteristic, batteries were prepared by the method described in Example 1.

A battery H was prepared using an electrolyte comprising a 2 wt. % aqueous solution of $Na_2SO_4$ and an immersion depth of 50% in the primary forming stage, and a battery I was prepared using the same electrolyte but using an immersion depth of approximately 100%; charging was carried out at a current of 9A (0.1q A) for a period of 6 minutes. The electrolyte for the secondary forming stage was then prepared by adding concentrated sulphuric acid to the electrolyte from the primary stage until a calculated $H_2SO_4$ concentration of 30 wt. % was obtained.

The next step is concerned with the second aspect of improvement of the present invention. Charging was carried out before the secondary forming stage at currents of up to 90A (1q A) for a maximum period of 5 minutes and then 50 Ah charging was carried out at a reduced current of 9A (0.1q A) as the secondary forming stage.

The high rate discharge characteristics of the batteries obtained were compared in terms of the discharge time until the terminal voltage reached 1.0 v/cell using discharging conditions of 300A and −15°C. The cycle life characteristics of the batteries were evaluated and compared by repeatedly charging and discharging the batteries in cycles each consisting of discharging at a current of 8A until the terminal voltage reached 1.6 v/cell and then charging at a current of 5A for 10 hours and comparing the number of charge/discharge cycles until the battery capacity dropped to 50% of its initial capacity. These discharge time characteristics and the number of charge/discharge cycles, compared with the values obtained at the beginning of the secondary forming stage, are shown in Figures 5 and 6 respectively.

Example 3

The procedure of Example 2 using an electrolyte comprising a 2 wt. % aqueous solution of $Na_2SO_4$ and an immersion depth of 50% was repeated, but the concentrated sulphuric acid was added over a period of 3 minutes following the primary forming stage and the supply of current was continued while increasing the charge current from 9A (0.1q A) to 45A (0.5q A). Charging was continued for a further 2 minutes, at the end of which time the current was decreased to 9A (0.1q A) for the secondary forming stage; the resulting battery was designated battery J. For the purposes of comparison, a battery K was prepared using the same 9A (0.1q A) current for both the primary and secondary forming stages. These batteries were evaluated in the same way as those of Example 2. The results are shown in Figures 5 and 6.

Example 4

Using an electrode immersion depth of 50% and a 1 wt. % aqueous solution of NaOH as the electrolyte, adding an aqueous solution of sulphuric acid without removing the electrolyte after the primary forming stage, and interposing a brief charging step using a 45A (0.5q A) current at the beginning of the secondary forming stage, a battery L was prepared by a procedure otherwise similar to that used in Example 2. A battery M was prepared by omitting the 45A charging step from the above procedure, a battery N by discarding the electrolyte used in the primary forming stage, adding an aqueous solution of sulphuric acid and interposing a brief charging step using a current of 45A (0.5q A) at the beginning of the secondary forming stage, and a battery O by the same procedure used for battery N but without the 45A charging step. Figure 7 shows the discharge times of these batteries until the terminal voltage reached 1.0 v/cell using discharging conditions of 300A and −15°C.

Example 5

Using electrode immersion depths of 50% (battery P) and 100% (battery Q), the primary forming stage was carried out using a weakly acidic aqueous solution comprising 2 wt. % of $Na_2SO_4$ and 1 wt. % of sulphuric acid as the electrolyte and a current of 9A (0.1q A). Sulphuric acid was then added to the electrolyte to give a 28 wt. % (calculated) aqueous solution of sulphuric acid; a brief (10 minute) intensive charging step at a current of 27A (0.3q A) was then carried out, followed by a 50 hour secondary forming stage at a current of 9A. During the primary forming stage, after the 9A charging had been started, at least one discharging step at a current of 9A was carried out for a period of 1 minute, the net charging for the primary forming stage amounting to 9A×10 minutes.

The cycle life characteristics of the batteries obtained were evaluated in the same way as those of Example 2; the results are shown in Figure 8. Figure 9 shows the relation between the discharge time terminal voltage and the cycle life of the batteries.

It can be seen from Figure 3 that battery P, which was prepared using partial immersion of the electrodes during the primary forming stage, showed a superior high rate discharge characteristic over a broad electrolyte pH range of from weak $H_2SO_4$ acidicity to alkalinity compared with battery G, which was prepared using complete submersion of the electrodes during the primary forming stage; even when the electrode immersion depth was 75 to 80%, there was no significant difference in characteristics from the battery prepared without a primary forming stage. This result arises from the fact that the upper part of the electrode contributes a great deal to the high rate discharge characteristic of the battery. An electrode immersion depth of 100%, a somewhat superior high rate discharge characteristic was obtained compared with battery G, which was prepared using complete submersion of the electrodes. This result suggests that the condition of 100% immersion is not the same as complete submersion, for example regarding the question of accumulation of gases, and that 100% immersion gives results only second to the results obtained using partial immersion.

On the other hand, as can be seen from Figure 4, the batteries obtained using partial immersion of the electrodes during the primary forming stage invariably gave far larger cycle numbers before capacity degradation than the equivalent number for battery F, which was prepared without a primary forming stage and showed a longer cycle life than battery G, which was prepared using complete submersion of the electrodes during the primary stage. These results suggest, in the first place, that even with only partial immersion, the electrolyte is carried to the part of the electrode above the electrolyte surface by capillary action and thereby reforms the interface between the grid and the active material. This is suggested by the fact that an improvement over battery F is achieved even when using an immersion depth of 0%, that is to say when the primary forming electrolyte is not removed at all and the lower edges of the electrodes are merely brought into contact with the electrolyte surface. Furthermore, when using partial immersion of the electrodes, the current density is clearly higher at the lower part of the electrode, which means a greater probability of $\alpha$-$PbO_2$ being formed at the lower part of the electrode so that the upper and lower parts of the electrode will contribute to discharging to different degrees. On the other hand, with reference to battery G, which was prepared using complete submersion of the electrodes, it appears that $\alpha$-$PBO_2$ and $\beta$-$PbO_2$ are formed uniformly on both the upper and lower parts of the electrode so that the lower part of the electrode discharges more readily, for example as the result of an increased concentration of electrolyte, and consequently the contribution of the lower part of the electrode to discharging is increased; this causes an early fall-off of the active material from this part of the electrode.

It can be seen from Figure 5 that in order to eliminate the effect of carryover of the primary forming electrolyte, which is unsuitable for the formation of comparatively active $PbO_2$, to the secondary forming stage, it was found effective to briefly apply a large current at the end of the primary forming stage or at the beginning of the secondary forming stage or at both times. The large current which is briefly applied is preferably of not less than 0.3q A and, more preferably, of not less than 0.5q A, where q is as defined above. The factors which interfere with the formation of active $PbO_2$ in the secondary forming stage are thereby eliminated to a remarkable degree. Batteries H and I showed that this improvement occurs regardless of whether partial immersion or 100% immersion is used during the primary forming stage. The effect of charging with this large current is to cause an evolution of gases.

On the other hand, the difference in performance between batteries J and K shows that this current can be applied during the transition from the primary forming stage to the secondary forming stage without interrupting the charging. This provides a simpler and more efficient charging system by which pasted electrodes set in a battery container can be made into batteries.

It can be seen from Figure 7 that discarding the electrolyte used in the primary forming stage before the secondary forming stage does not necessarily have a desirable effect on the activation process of the secondary stage, but may result in a non-uniformity of the high rate discharge characteristic. In contrast, the difference in performance between batteries N and O indicates that the brief application of a large current as discussed above, contributes favourably to the uniformity of the high rate discharge characteristic. Furthermore, the difference in performance between batteries M and O shows that it is preferable to carry out the secondary forming stage using an electrolyte prepared by retaining the primary forming electrolyte and adding concentrated sulphuric acid to it to give the desired acid concentration; the performance of battery L shows that the concurrent use of these two procedures results in a further improvement in the uniformity of characteristics of the resulting battery.

Furthermore, comparison of the performances of batteries A to E in Figure 3 shows clearly that the effect of the primary forming stage on the improvement to the cycle life of the resulting battery is greatest when the primary stage is carried out in an electrolyte comprising a dilute aqueous solution of sulphuric acid not exceeding 15% by weight of $H_2SO_4$ and also on the alkaline side. In addition, as in the case of reforming the interface between the grid and the active material, the greater the amount of electricity used in the primary forming stage, the greater is the cycle life of the resulting battery. However, the use of an increased amount of electricity in the primary forming stage leads to an increased degree of degradation of the high rate discharge characteristic which cannot be completely avoided even by only partially immersing the electrodes. The amount of electricity used in the primary forming stage is preferably not more than 20% of the theoretical positive electrode capacity. By way of illustration, when a battery having a good high rate discharge characteristic is required, it is desirable during the primary forming stage to use a small amount of electricity ranging from 0.01 to 0.1% of the theoretical positive electrode capacity and an alkaline or near-neutral electrolyte which contributes to an improved cycle life. Thus primary forming conditions can be selected according to the intended application of the battery. Figure 8 shows that the cycle life of the battery can be improved by carrying out at least one discharging step during the primary forming stage. The degree of improvement obtained was greater for battery P which was prepared using a lower immersion depth than was used for battery Q. Furthermore, the relation between the voltage at the end of 1 minute of discharging and the cycle life of the battery prepared using one discharging step during the primary forming stage indicates that a battery which is given such a discharge has a superior cycle life. The extent of this discharge is preferably to a terminal voltage of at least 1.75 v/cell or less; for best results, a polarity reversal at 0 v/cell should be obtained. It appears that by such a deep discharge, the protective layer of α-$PbO_2$, etc. formed near the grid turns into a tough structure which improves the life cycle characteristic of the resulting battery.

Discharging during the secondary forming stage can also be carried out as desired. Furthermore, the magnitude of the discharge current used can be selected as required.

Thus, the present invention is of value in improving the characteristics of maintenance-free batteries containing lead-calcium-tin alloy grids, which tend to suffer from an early loss of capacity, and provides a lead acid storage battery having both an excellent high rate discharge characteristic and a desirable life cycle.

**Claims**

1. A method of forming a lead acid storage battery, which comprises:

(a) a primary forming stage in which charging is carried out in an electrolyte comprising an alkaline aqueous solution, a neutral aqueous solution, or an aqueous sulphuric acid solution containing 15 wt. % or less of $H_2SO_4$, and

(b) a secondary forming stage in which charging is carried out in an electrolyte comprising an aqueous sulphuric acid solution containing more than 15 wt. % of $H_2SO_4$, characterised in that during the primary forming stage, the charging current is not more than 0.2q A, where q is the theoretical positive electrode capacity in Ah, and the depth of immersion of the electrodes in the electrolyte is from 20 to 80% of the height of the electrodes.

2. A method according to claim 1, in which an additional charging step using a current of at least 0.3q A, where q is as defined in claim 1, is carried out at the end of the primary forming stage and/or at the beginning of the secondary forming stage.

3. A method according to claim 2, in which the additional charging step is carried out at least in part while the electrolyte composition used in the primary forming stage is being altered to that used in the secondary forming stage.

4. A method according to any of claims 1 to 3, in which an aqueous solution of sulphuric acid is added to the electrolyte used in the primary forming stage without discarding same to provide the electrolyte for the secondary forming stage.

5. A method according to any of claims 1 to 4, in which the primary forming state includes at least one discharging step.

6. A method according to claim 5, in which the discharging step(s) is taken to a terminal voltage of 1.75 v/cell or less.

**Patentansprüche**

1. Verfahren zur Formierung eines Bleiakkumulators, umfassend:

(a) eine primäre Formierungsstufe, bei der die Aufladung in einem Elektrolyten aus einer alkalischen oder neutralen wässrigen Lösung oder wässriger Schwefelsäure mit höchstens 5 Gew.-% $H_2SO_4$ erfolgt, und

(b) eine sekundäre Formierungsstufe, bei der die Aufladung in einem Elektrolyten aus wässriger Schwefelsäure mit mehr als 15 Gew.-% $H_2SO_4$ erfolgt,

dadurch gekennzeichnet, dass in der primären Formierungsstufe der Ladestrom höchstens 0,2q A, wobei q die theoretische positive Elektrodenkapazität in Ah bedeutet, und die Eintauchtiefe der Elektroden in den Elektrolyten 20 bis 80% von deren Höhe betragen.

2. Verfahren nach Anspruch 1, worin vor der Beendigung der primären und/oder zu Beginn der sekundären Formierungsstufe eine zusätzliche Ladestufe mit einem Strom von mindestens 0,3q A, wobei q die in Anspruch 1 angegebene Bedeutung hat, erfolgt.

3. Verfahren nach Anspruch 2, worin die zusätzliche Ladestufe zumindest teilweise während der Änderung der in der primären Formierungsstufe angewandten Elektrolytzusammensetzung in die der sekundären Formierungsstufe erfolgt.

4. Verfahren nach einem der Ansprüche 1 bis 2, worin dem in der ersten Formierungsstufe angewandten Elektrolyten, ohne diesen zu verwerfen, wässrige Schwefelsäure zugesetzt wird, um so den Elektrolyten für die sekundäre Formierungsstufe zu bilden.

5. Verfahren nach einem der Ansprüche 1 bis 4, worin die primäre Formierungsstufe mindestens einen Entladungsvorgang einschliesst.

6. Verfahren nach Anspruch 5, worin der bzw. die Entladungsvorgänge bis zu einer Endspannung von 1,75 V/Zelle oder niedriger durchgeführt werden.

**Revendications**

1. Un procédé d'élaboration d'une batterie d'accumulateur au plomb qui comprend:

(a) une étape d'élaboration primaire dans laquelle on effectue la charge dans un électrolyte comprenant une solution aqueuse alcaline, une solution aqueuse neutre, ou une solution aqueuse de l'acide sulfurique contenant 15% en poids ou moins d'$H_2SO_4$, et

(b) une étape d'élaboration secondaire dans laquelle on effectue la charge dans un électrolyte comprenant une solution aqueuse d'acide sulfurique contenant plus de 15% en poids d'$H_2SO_4$,

caractérisé en ce qu'au cours de l'étape d'élaboration primaire, le courant de charge n'est pas supérieure à 0,2q A, où q est la capacité de l'électrode positive théorique en Ah, et que la profondeur d'immersion des électrodes dans l'électrolytes est comprise entre 20 et 80% de la hauteur des électrodes.

2. Un procédé selon la revendication 1, dans lequel on effectue une étape de charge supplémentaire en employant un courant d'au moins 0,3q A, où q est tel qu'il est défini à la revendication 1, à la fin de l'étape d'élaboration primaire et/ou au commencement de l'étape d'élaboration secondaire.

3. Un procédé selon la revendication 2, dans lequel on effectue l'étape de charge supplémentaire au moins en partie pendant que l'on modifie la composition de l'électrolyte employée dans l'étape d'élaboration primaire en celle que est employée dans l'étape de fabrication secondaire.

4. Un procédé selon l'une quelconque des revendications 1 à 3, dans lequel on ajoute une solution aqueuse d'acide sulfurique à l'électrolyte employé dans l'étape d'élaboration primaire sans rejeter celui-ci pour fournir l'électrolyte pour l'étape d'élaboration secondaire.

5. Un procédé selon l'une quelconque des revendications 1 à 4, dans lequel l'étape d'élaboration primaire comporte au moins une étape de décharge.

6. Un procédé selon la revendication 5, dans lequel on procéda à la (aux) étape(s) de décharge à une tension aux bornes de 1,75 v/cellule ou moins.

FIG. 1

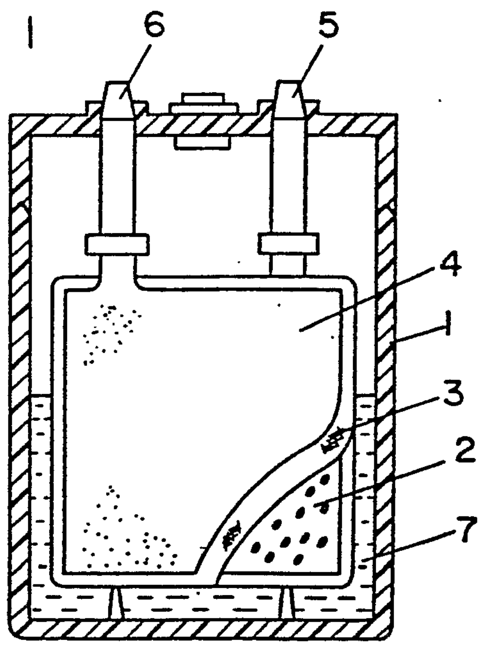


FIG. 2

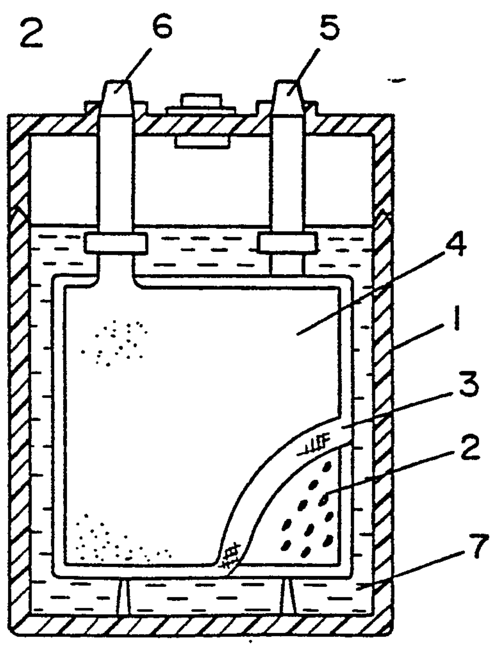

FIG. 3

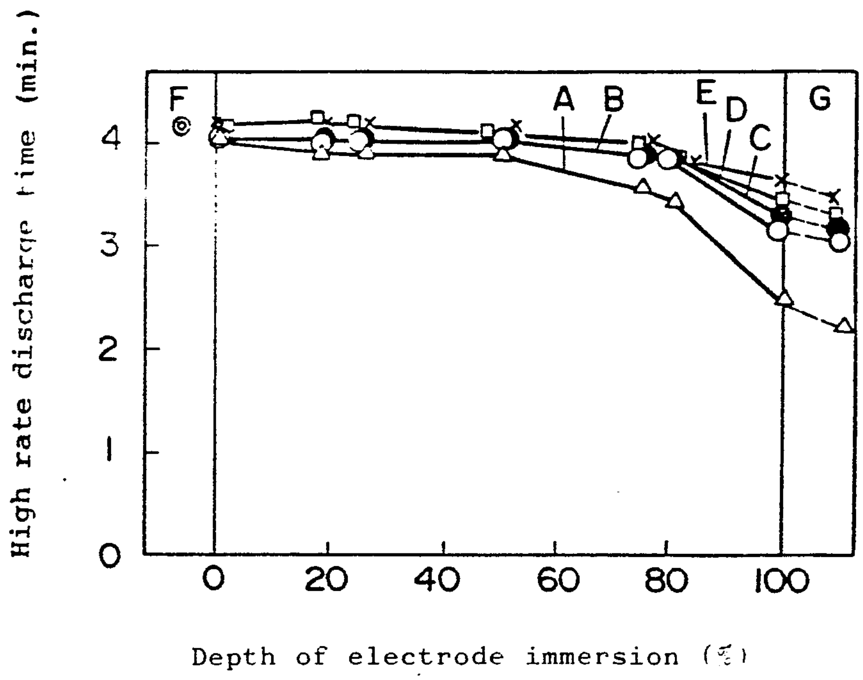
High rate discharge time (min.)
4
3
2
1
0
F
G
A
B
E
D
C
0
20
40
60
80
100
Depth of electrode immersion (%)

FIG. 4

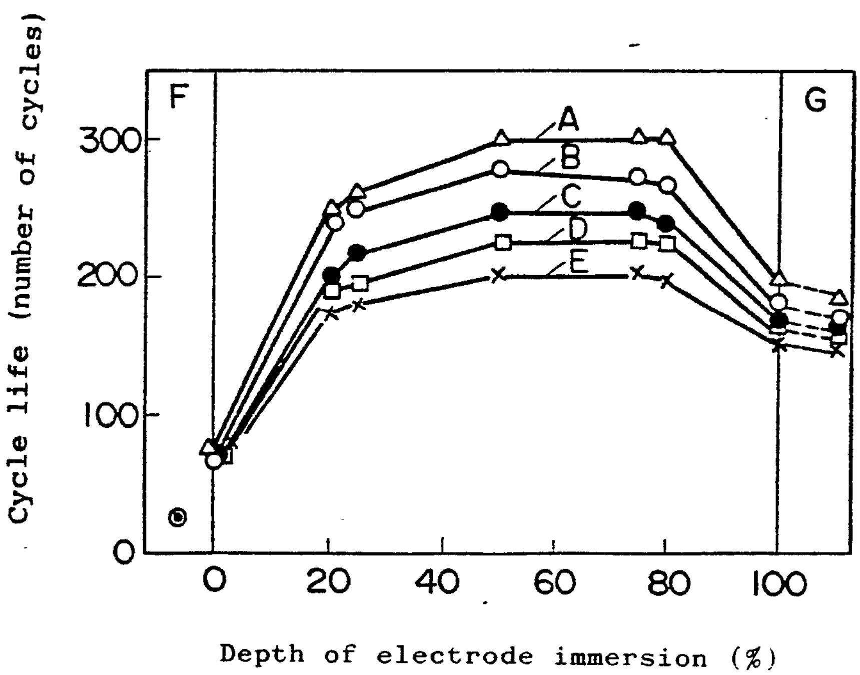
Cycle life (number of cycles)
300
200
100
0
F
G
A
B
C
D
E
0
20
40
60
80
100
Depth of electrode immersion (%)

FIG. 5

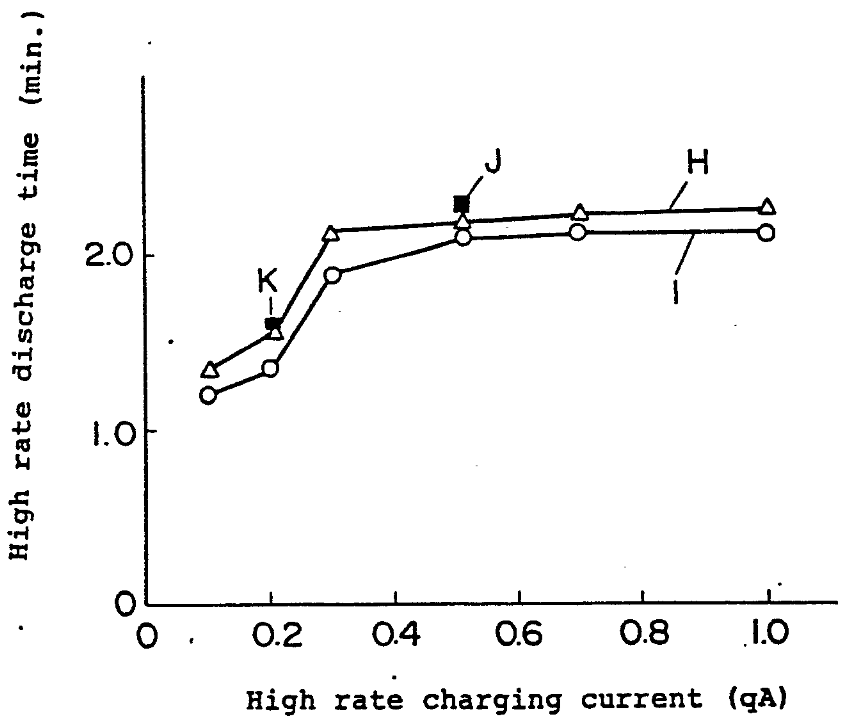
High rate discharge time (min.)
2.0
1.0
0
0
0.2
0.4
0.6
0.8
1.0
High rate charging current (qA)
K
J
H
I

FIG. 6

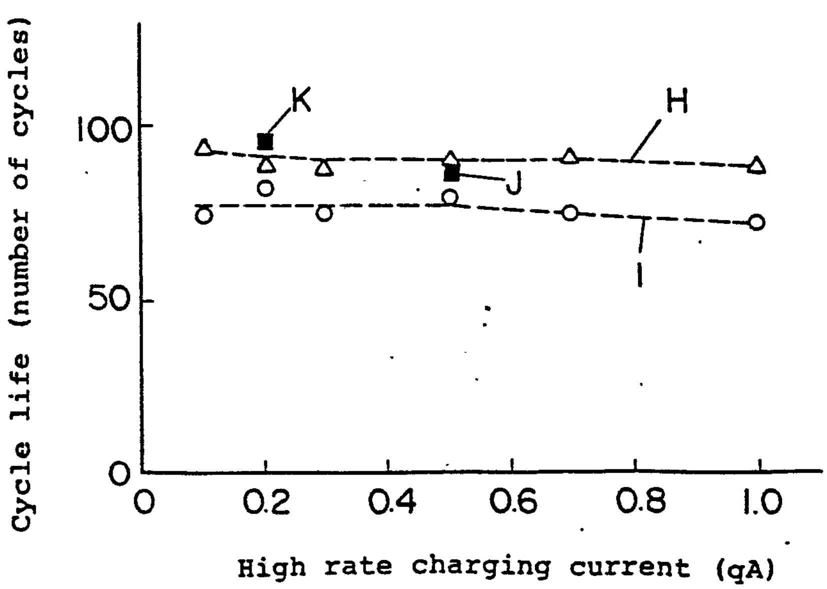
Cycle life (number of cycles)
100
50
0
0
0.2
0.4
0.6
0.8
1.0
High rate charging current (qA)
K
H
J
I

FIG. 7

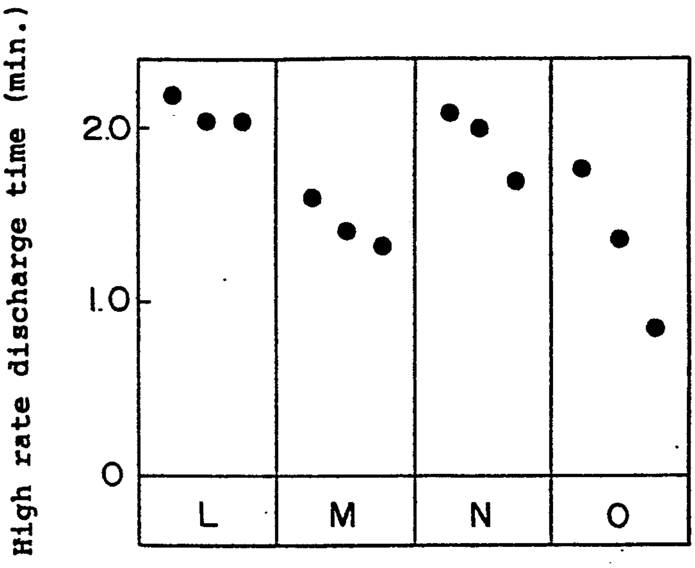

FIG. 8

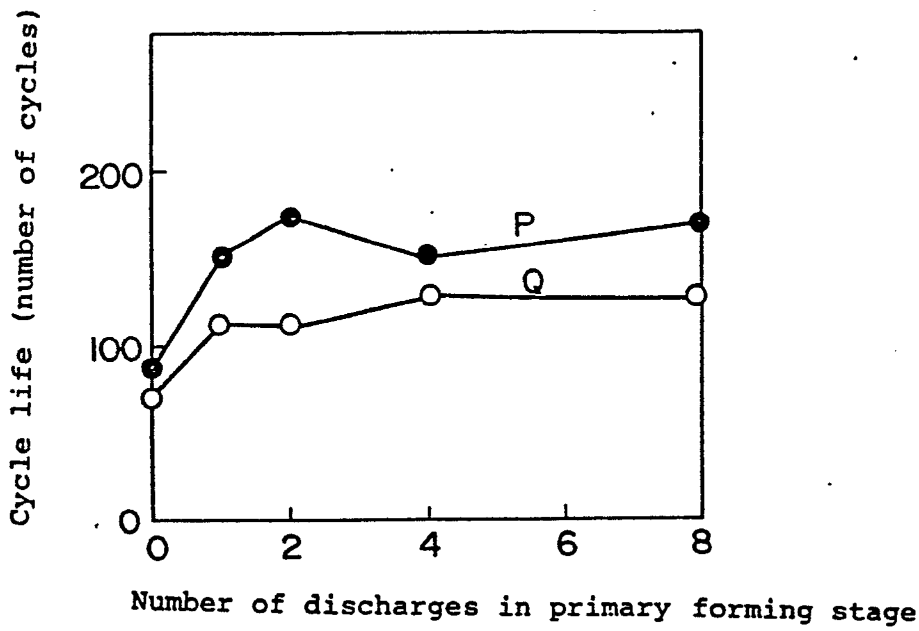
Cycle life (number of cycles)
200
100
0
P
Q
0
2
4
6
8
Number of discharges in primary forming stage

FIG. 9

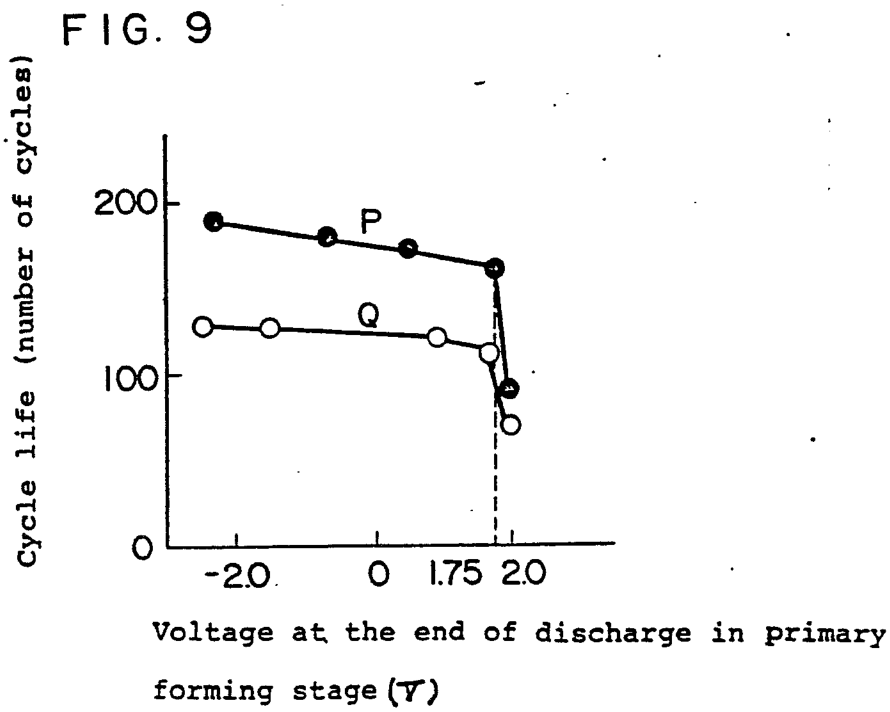
Cycle life (number of cycles)
200
100
0
P
Q
-2.0
0
1.75
2.0
Voltage at the end of discharge in primary forming stage (V)